# EUROPEAN PATENT APPLICATION

(11) **EP 4 818 567 A1**
(43) Date of publication of application: **07.10.2026**
(21) Application number: 24897511.2
(22) Date of filing: 26.11.2024
(51) Int. Cl.: F16L 59/22, F16L 9/18, F16L 43/00, F16L 59/065

(54) **PIPING UNIT FOR LIQUEFIED GAS AND METHOD FOR ASSEMBLING SAME**

(30) Priority: 30.11.2023 JP 2023203307
(71) Applicant: KAWASAKI JUKOGYO KABUSHIKI KAISHA, Kobe-shi, Hyogo 650-8670 (JP)
(72) Inventor: KIMOTO, Kenta, Kobe-shi, Hyogo 650-8670 (JP); TAKEUCHI, Nobuyoshi, Kobe-shi, Hyogo 650-8670 (JP); NAKASHIMA, Kentaro, Kobe-shi, Hyogo 650-8670 (JP); TAKESHITA, Kyohei, Kobe-shi, Hyogo 650-8670 (JP); KOBAYASHI, Taizou, Kobe-shi, Hyogo 650-8670 (JP)
(74) Representative: Arnold & Siedsma
(86) International application number: PCT/JP2024/041709
(87) International publication number: WO 2025/115826

(57) **Abstract**

A piping unit (1) configured to transfer liquefied gas includes a first straight pipe (3A) and a second straight pipe (3B). The first straight pipe (3A) includes a first inner pipe (5A) through which the liquefied gas flows, and a first outer pipe (9A) covering the first inner pipe (5A) with a vacuum layer (7) interposed therebetween, and extends in a straight line. The second straight pipe (3B) includes a second inner pipe (5B) through which the liquefied gas flows, and a second outer pipe (9B) covering the second inner pipe (5B) with a vacuum layer (7) interposed therebetween, and extends in a straight line in a direction different from an extension direction of the first straight pipe (3A). The piping unit (1) further includes a connection bent pipe (11) connecting the first inner pipe (5A) to the second inner pipe (5B), and a cover pipe (15) covering a connection portion (13) between the first inner pipe (5A) and the second inner pipe (5B), the connection portion including at least the connection bent pipe (11).

## Description

### CROSS REFERENCE TO THE RELATED APPLICATION

This application is based on and claims Convention priority to Japanese patent application No. 2023-203307, filed November 30, 2023, the entire disclosure of which is herein incorporated by reference as a part of this application.

### FIELD OF THE INVENTION

The present disclosure relates to a liquefied gas piping unit and a method for assembling the same.

### BACKGROUND ART

Conventionally, it has been proposed to use a double-walled vacuum insulated pipe as a pipe for transferring liquefied gas, such as liquefied natural gas or liquid hydrogen (see, for example, Patent Document 1). Such a double-walled pipe has a structure in which an outer pipe covers an inner pipe with a vacuum insulation layer interposed therebetween, thereby achieving high thermal insulation to effectively suppress a temperature increase of the low-temperature liquefied gas flowing through the inner pipe.

In general, piping for liquefied gases is often provided in large facilities, such as storage facilities equipped with large tanks and liquefied gas carriers, and is often installed as a piping unit including a plurality of pipes that extend in various directions and are connected to each other. Furthermore, since a double-walled pipe is provided with accessory components between the inner and outer pipes for supporting the pipes and maintaining spacing therebetween, and as described above, a double-walled pipe for liquefied gas requires the space between the inner and outer pipes to be evacuated to a high-vacuum state, the installation work of a piping unit including double-walled pipes becomes complicated. To address this situation, conventionally, it is common practice to complete the assembly work of the double-walled pipes, including accessory components, in advance at a piping factory or the like, and then transport the assembled double-walled pipes to an installation site. At the installation site, the double-walled pipes can be installed through simple operations, such as coupling the double-walled pipes to each other. This can improve the accuracy and efficiency of the assembly and installation work of a double-walled pipe units, which otherwise require advanced skills.

### RELATED DOCUMENT

### PATENT DOCUMENT

[Patent Document 1] JP Laid-open Patent Publication No. 2022-101284

### SUMMARY OF THE INVENTION

### PROBLEMS TO BE SOLVED BY THE INVENTION

Conventionally, however, the connection of the double-walled pipes at the installation site is typically performed at locations where the double-walled pipes are arranged in a straight line. Accordingly, a double-walled pipe having a bent pipe portion is preassembled as a unit and transported to the installation site. As a result, a large space is required for temporary storage and transportation of the double-walled pipes during the assembly process, thereby incurring high installation costs. In addition, since the preassembled piping blocks include bent pipe portions, their fabrication is made more complex, leading to increased fabrication costs.

An object of the present disclosure is, in order to solve the above problems, to reduce fabrication costs of a liquefied gas piping unit and to reduce installation costs by reducing a space required in the assembly process of the liquefied gas piping unit.

### MEANS FOR SOLVING THE PROBLEMS

In order to achieve the above object, a liquefied gas piping unit according to the present disclosure is
a piping unit configured to transfer liquefied gas, the piping unit including:
a first straight pipe including a first inner pipe through which the liquefied gas flows, and a first outer pipe covering the first inner pipe with a vacuum layer interposed therebetween, the first straight pipe extending in a straight line;
a second straight pipe including a second inner pipe through which the liquefied gas flows, and a second outer pipe covering the second inner pipe with a vacuum layer interposed therebetween, the second straight pipe extending in a straight line in a direction different from an extension direction of the first straight pipe;
a connection bent pipe connecting the first inner pipe to the second inner pipe; and
a cover pipe covering a connection portion between the first inner pipe and the second inner pipe, the connection portion including at least the connection bent pipe.

A method for assembling a liquefied gas piping unit according to the present disclosure is a method for assembling the liquefied gas piping unit, the method including:
preparing the first straight pipe by combining the first inner pipe and the first outer pipe and evacuating a space between the first inner pipe and the first outer pipe to form the vacuum layer;
preparing the second straight pipe by combining the second inner pipe and the second outer pipe and evacuating a space between the second inner pipe and the second outer pipe to form the vacuum layer;
connecting the first straight pipe to the second straight pipe via the connection bent pipe by coupling the first inner pipe of the first straight pipe to one end of the connection bent pipe and coupling the second inner pipe of the second straight pipe to the other end of the connection bent pipe; and
covering, with the cover pipe, the connection portion between the first inner pipe and the second inner pipe, the connection portion including at least the connection bent pipe.

According to the present disclosure, by improving the shape of constituent blocks of the liquefied gas piping unit, fabrication costs can be reduced, and by improving the transport efficiency of the liquefied gas piping unit, installation costs can be reduced.

Note that any combination of at least two components disclosed in the appended claims and/or the specification and/or the drawings is included in the present disclosure. In particular, any combination of two or more of the claims set forth in the appended claims is included in the present disclosure.

### BRIEF DESCRIPTION OF THE DRAWINGS

The present disclosure will become more clearly understood from the following description of a preferred embodiment when taken in conjunction with the accompanying drawings. However, the embodiment and the drawings are provided solely for the purpose of illustration and description, and are not intended to define the scope of the present disclosure. The scope of the present disclosure is to be determined by the appended claims. In the accompanying drawings, like reference numerals are used to denote like parts throughout the several drawings.
[Fig. 1] Fig. 1 is a plan view illustrating a schematic configuration of a liquefied gas piping unit according to an embodiment of the present disclosure.
[Fig. 2] Fig. 2 is a longitudinal cross-sectional view illustrating, in an enlarged manner, a periphery of a connection portion of the liquefied gas piping unit of Fig. 1.
[Fig. 3] Fig. 3 is a longitudinal cross-sectional view illustrating a modification example of the liquefied gas piping unit in Fig. 2, in which the shape of a cover pipe is different.
[Fig. 4] Fig. 4 is a perspective view illustrating a modification example of the liquefied gas piping unit of Fig. 2, in which the manner of division of the cover pipe is different.
[Fig. 5] Fig. 5 is a longitudinal cross-sectional view illustrating, in an enlarged manner, a coupling portion between a straight pipe and a cover pipe of the liquefied gas piping unit according to an embodiment of the present disclosure.
[Fig. 6] Fig. 6 is a longitudinal cross-sectional view illustrating a modification example of the liquefied gas piping unit of Fig. 5, in which the structures of the straight pipe and the cover pipe are different.
[Fig. 7] Fig. 7 is a longitudinal cross-sectional view illustrating a modification example of the liquefied gas piping unit of Fig. 5, in which the structure of a closure portion is different.
[Fig. 8] Fig. 8 is a flowchart illustrating a schematic procedure of a method for assembling a liquefied gas piping unit according to an embodiment of the present disclosure.

### DESCRIPTION OF EMBODIMENTS

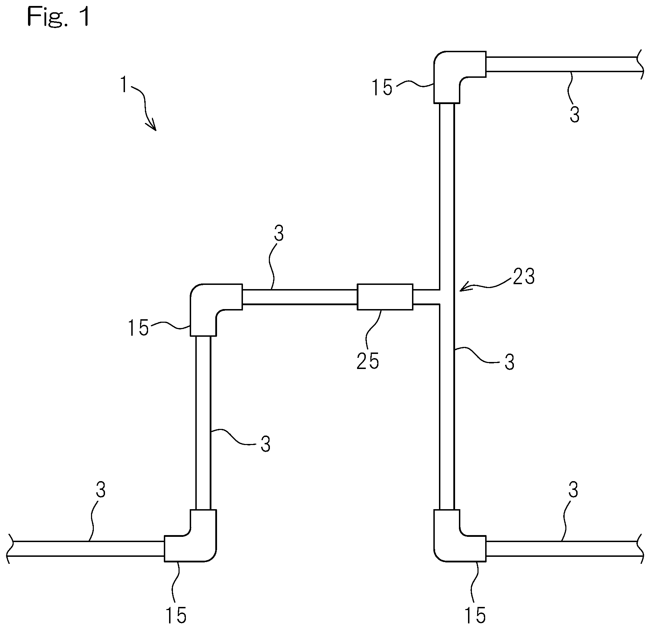

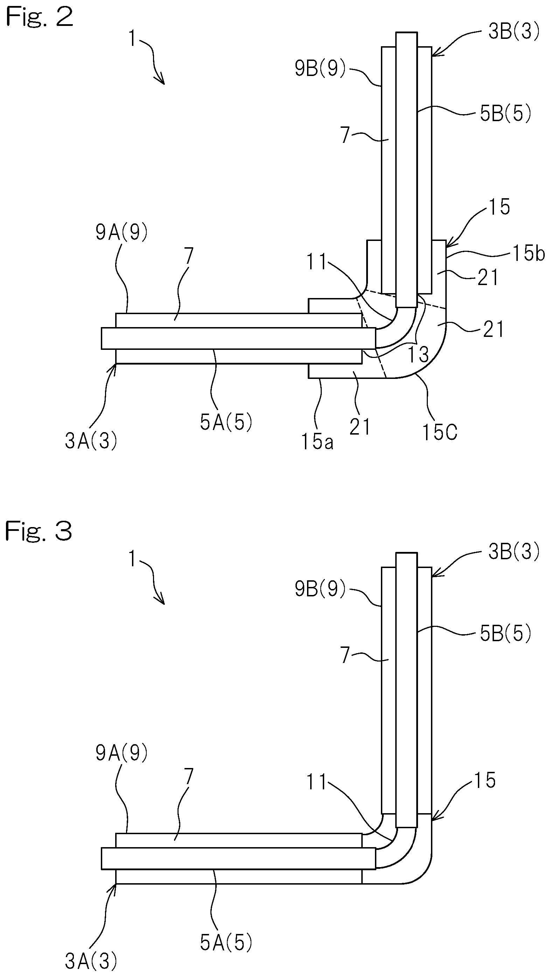

Hereinafter, a preferred embodiment of the present disclosure will be described with reference to the drawings. Fig. 1 illustrates a liquefied gas piping unit 1 according to an embodiment of the present disclosure. In the following description, the liquefied gas piping unit 1 is simply referred to as the "piping unit 1". The piping unit 1 is used to transfer liquefied gas. The piping unit 1 includes a plurality of straight pipes 3 extending in a straight line. As illustrated in Fig. 2, each straight pipe 3 has a double-walled pipe structure including an inner pipe 5 through which the liquefied gas flows, and an outer pipe 9 covering the inner pipe 5 with a vacuum layer 7 interposed therebetween. The piping unit 1 further includes a connection bent pipe 11 connecting the inner pipes 5 of the plurality of straight pipes 3 to each other, and a cover pipe 15 covering a connection portion 13 between the inner pipes 5.

In the present specification, out of two straight pipes 3 connected by the connection bent pipe 11, one straight pipe 3 is referred to as a "first straight pipe 3A", and the other straight pipe 3 is referred to as a "second straight pipe 3B". In addition, the inner pipe 5 and the outer pipe 9 of the first straight pipe 3A are respectively referred to as a "first inner pipe 5A" and a "first outer pipe 9A", and the inner pipe 5 and the outer pipe 9 of the second straight pipe 3B are respectively referred to as a "second inner pipe 5B" and a "second outer pipe 9B". However, since the first straight pipe 3A and the second straight pipe 3B may have the same structure, when matters common to the straight pipes 3A and 3B are described, they are simply referred to as the "straight pipe 3", the "inner pipe 5", and the "outer pipe 9".

The piping unit 1 is used, for example, in a liquefied gas storage facility such as a liquefied gas storage ship or an onshore liquefied gas storage base. In the present specification, the "liquefied gas storage ship" refers to a ship having a function of storing liquefied gas. Examples of the liquefied gas storage ship include, in addition to a liquefied gas carrier, a liquefied gas fueled ship, a bunkering ship for supplying liquefied gas to another ship, and the like. However, the liquefied gas storage facility is not limited to a ship as long as it is a facility having a structure and function of storing liquefied gas, and may be, for example, an onshore liquefied gas storage facility or a plant using liquefied gas.

The liquefied gas transferred through the piping unit 1 is, for example, liquefied petroleum gas (LPG, about -45°C), liquefied ethylene gas (LEG, about -100°C), liquefied natural gas (LNG, about -160°C), liquid hydrogen (LH₂, about -250°C), or liquid helium (LHe, about -270°C). In the present embodiment, liquid hydrogen is transferred via the piping unit 1.

As illustrated in Fig. 2, the second straight pipe 3B extends in a straight line in a direction different from a direction in which the first straight pipe 3A extends. In the illustrated example, the first straight pipe 3A and the second straight pipe 3B are disposed such that an extension direction of the first straight pipe 3A and an extension direction of the second straight pipe 3B intersect substantially at a right angle in the same plane. In addition, in each straight pipe 3, an end of the inner pipe 5 protrudes from the outer pipe 9. The first inner pipe 5A of the first straight pipe 3A thus configured is coupled to one end of the connection bent pipe 11, and the second inner pipe 5B of the second straight pipe 3B is coupled to the other end of the connection bent pipe 11, thereby connecting the first inner pipe 5A and the second inner pipe 5B via the connection bent pipe 11. Although not illustrated, each outer pipe 9 has an evacuation port for evacuating a space between the outer pipe 9 and the inner pipe 5.

In the present embodiment, the connection bent pipe 11 has, at both ends thereof, the same diameter as each inner pipe 5. In addition, the connection bent pipe 11 is made of the same metal material as the inner pipe 5. In the illustrated example, the connection bent pipe 11 is formed in a curved shape that smoothly deflects from the extension direction of the first straight pipe 3A to the extension direction of the second straight pipe 3B. However, the shape of the connection bent pipe 11 is not limited to a curved shape.

The cover pipe 15 covers the connection portion 13 between the first inner pipe 5A and the second inner pipe 5B. Specifically, the "connection portion 13" covered by the cover pipe 15 refers to a portion that is exposed outside the first outer pipe 9A and the second outer pipe 9B within a section constituted by the connection bent pipe 11 and the respective ends of the first inner pipe 5A and the second inner pipe 5B connected to each other via the connection bent pipe 11. In this example, the "connection portion 13" is a portion constituted by the connection bent pipe 11, the end of the first inner pipe 5A protruding from the first outer pipe 9A, and the end of the second inner pipe 5B protruding from the second outer pipe 9B. In addition, as illustrated in the example of Fig. 2, the cover pipe 15 may cover the respective ends of the first outer pipe 9A and the second outer pipe 9B beyond the range of the "connection portion 13". The extent to which the cover pipe 15 covers the first outer pipe 9A and the second outer pipe 9B may be appropriately determined in accordance with the length required for thermal insulation of the connection portion.

In addition, in the example of Fig. 2, the pipe diameter of the cover pipe 15 is larger than that of the outer pipe 9; however, the pipe diameter of the cover pipe 15 may be the same as the pipe diameter of the outer pipe 9. For example, as illustrated as a modification example in Fig. 3, end surfaces at both ends of the cover pipe 15 may be coupled to the respective end surfaces of the first outer pipe 9A and the second outer pipe 9B, respectively. Alternatively, a step portion having a smaller diameter than the outer pipe 9 may be provided at the end of the outer pipe 9, and the step portion may be inserted into the cover pipe 15.

The cover pipe 15 covers the connection portion 13 in a sealable manner. In addition, although not illustrated, the cover pipe 15 has an evacuation port for evacuating the interior thereof, and when the installation of the piping unit 1 is completed, the vacuum layer 7 is formed inside the cover pipe 15.

In the present embodiment, the cover pipe 15 has a shape corresponding to the shape of the connection bent pipe 11. That is, the cover pipe 15 has a shape that is recessed toward the connection bent pipe 11 on an inner side of the connection portion 13 forming a corner shape deflecting from the first straight pipe 3A to the second straight pipe 3B via the connection bent pipe 11, and protrudes toward a side opposite to the connection bent pipe 11 on an outer side of the corner shape. In the illustrated example, the cover pipe 15 includes: a first cylindrical portion 15a having a larger diameter than the first outer pipe 9A and disposed concentrically with the first outer pipe 9A; a second cylindrical portion 15b having a larger diameter than the second outer pipe 9B and disposed concentrically with the second outer pipe 9B; and a bent pipe portion 15c shaped so as to smoothly couple the first cylindrical portion 15a to the second cylindrical portion 15b. The shape of the cover pipe 15 is not limited to this example, and may be, for example, a substantially rectangular parallelepiped shape as a whole that protrudes toward the side opposite to the connection bent pipe 11 even on the inner side of the corner shape of the connection portion 13. However, by forming the cover pipe 15 in a shape corresponding to the shape of the connection bent pipe 11, the installation space of the piping unit 1 can be reduced.

In the present embodiment, as illustrated in Fig. 2, the cover pipe 15 includes a plurality of divided bodies 21. Specifically, in this example, the cover pipe 15 is formed of a plurality of divided bodies 21, e.g., three divided bodies 21 in this example, arranged along an extension direction from the first inner pipe 5A toward the second inner pipe 5B. In other words, the cover pipe 15 is formed of a plurality of divided bodies 21 having a shape cut along a plane orthogonal to the extension direction from the first inner pipe 5A toward the second inner pipe 5B.

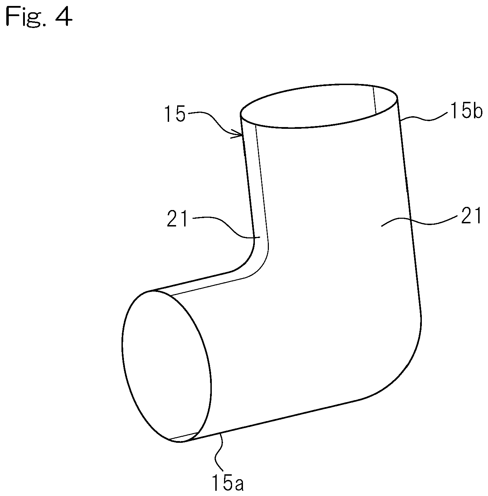

When the cover pipe 15 is formed of a plurality of divided bodies 21, the manner of division is not limited to the above example. For example, as illustrated in Fig. 4, the cover pipe 15 may be formed of two divided bodies 21 each having a shape obtained by cutting the first cylindrical portion 15a and the second cylindrical portion 15b in half along a plane parallel to the extension direction. Thus, by forming the cover pipe 15 from the divided bodies 21, the assembly work of the piping unit 1 at the installation site is facilitated, as will be described later. However, forming the cover pipe 15 from the divided bodies 21 is not essential, and the cover pipe 15 may be formed as a single pipe body.

Note that, as illustrated in Fig. 1, in the present embodiment, the two straight pipes 3 disposed in a portion of the piping unit 1 where an L-shaped flow path is formed are coupled to each other by the connection bent pipe 11 and the cover pipe 15 illustrated in Fig. 2, whereas a T-shaped flow path portion 23 is formed of a single double-walled pipe. In addition, accordingly, one end of the double-walled pipe of the T-shaped flow path portion 23 is connected to the straight pipe 3 via a straight cover pipe 25. However, regarding the T-shaped flow path portion 23 in the piping unit 1, three straight pipes 3 may alternatively be coupled by a T-shaped bent pipe and a T-shaped cover pipe 15.

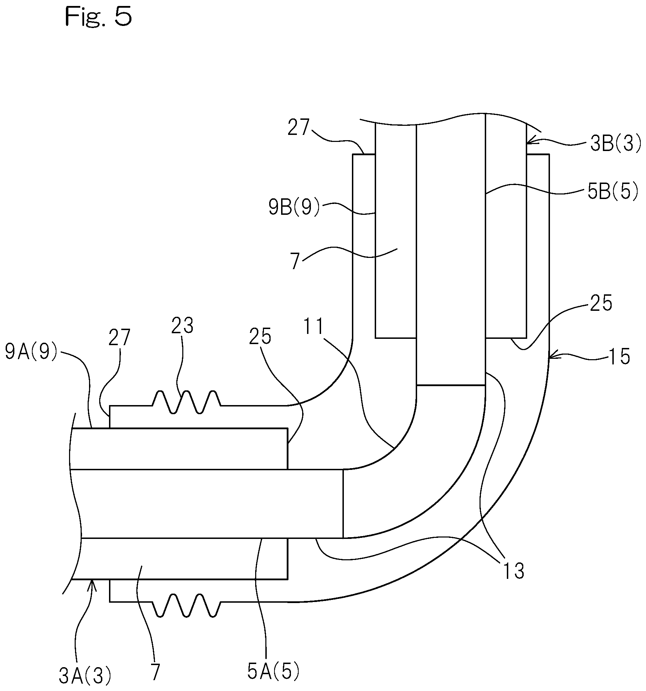

Furthermore, as illustrated in Figs. 5 to 7, the first straight pipe 3A and the cover pipe 15 may have flexibility at a coupling portion between the first straight pipe 3A and the cover pipe 15. Similarly, although not illustrated, the second straight pipe 3B and the cover pipe 15 may have flexibility at a coupling portion between the second straight pipe 3B and the cover pipe 15. As used herein, the coupling portion between the straight pipe 3 and the cover pipe 15 refers to a location where these pipes interact with each other and an area around the location, and is a portion susceptible to a bending load caused by thermal contraction of the connection bent pipe 11. For example, in a configuration where the straight pipe 3 and the cover pipe 15 overlap each other, the coupling portion includes the straight pipe 3 and the cover pipe 15 within the overlapping range, a closure portion 25 of the straight pipe 3, and a closure portion 27 of the cover pipe 15. In addition, for example, in a case where the straight pipe 3 and the cover pipe 15 have the same pipe diameter and are coupled to each other (Fig. 3), the coupling portion includes a coupling location including closure portions of these pipes and an area around the coupling location. At the coupling portion, the extent of a region having flexibility and an allowable displacement amount can be appropriately set depending on a bending load that may be generated by thermal contraction of the connection bent pipe 11 and its surroundings. Depending on the magnitude of the bending load that can be generated by the thermal contraction, the stress can be accommodated solely by the inherent flexibility of the straight pipe 3, the cover pipe 15, and/or the closure portions 25 and 27 themselves.

Flexibility of the coupling portion can be achieved, for example, by employing the configurations illustrated in Figs. 5 to 7. Note that, in the examples of Figs. 5 to 7, the configurations for providing flexibility to the coupling portion are used in combination; however, the present disclosure is not limited to these examples, and only one of the configurations may be used depending on a bending load that may be generated. In addition, the configuration illustrated only on the first straight pipe 3A side may correspondingly be provided on the second straight pipe 3B side.

As illustrated in Fig. 5, the cover pipe 15 may have a displacement allowance portion 23 at the coupling portion between the cover pipe 15 and the first straight pipe 3A. Although not illustrated, the cover pipe 15 may also have a displacement allowance portion at the coupling portion between the cover pipe 15 and the second straight pipe 3B. The displacement allowance portion 23 is, for example, a bellows. A bellows provided in the cover pipe 15 can mitigate stress caused by a bending load.

Alternatively or additionally, in the first straight pipe 3A, the closure portion 25 closing a space between the first outer pipe 9A and the first inner pipe 5A may have flexibility, and in the cover pipe 15, the closure portion 27 closing a space between the cover pipe 15 and the first outer pipe 9A may have flexibility. Similarly, in the second straight pipe 3B, the closure portion 25 closing a space between the second outer pipe 9B and the second inner pipe 5B may have flexibility, and in the cover pipe 15, the closure portion 27 closing a space between the cover pipe 15 and the second outer pipe 9B may have flexibility. Accordingly, since the closure portion 25 of the straight pipe 3 and the closure portion 27 of the cover pipe 15 have flexibility, it is possible to absorb a bending load that may be generated by thermal contraction of the connection bent pipe 11 and its surroundings, thereby mitigating stress applied to the straight pipe 3 and the cover pipe 15.

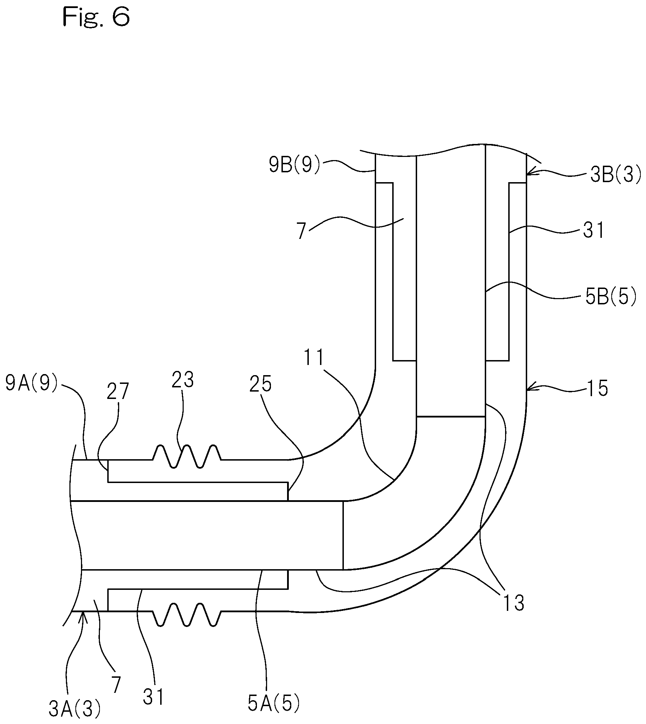

In addition, as illustrated in Fig. 6, even in a structure where a step portion 31 having a smaller diameter than the outer pipe 9 is provided at the end of the outer pipe 9 and the step portion 31 and is inserted into and connected to the cover pipe 15, the cover pipe 15 may have the displacement allowance portion 23 for providing flexibility to the coupling portion between the cover pipe 15 and the first straight pipe 3A, depending on a bending load that may be generated. This displacement allowance portion 23 is likewise, for example, a bellows.

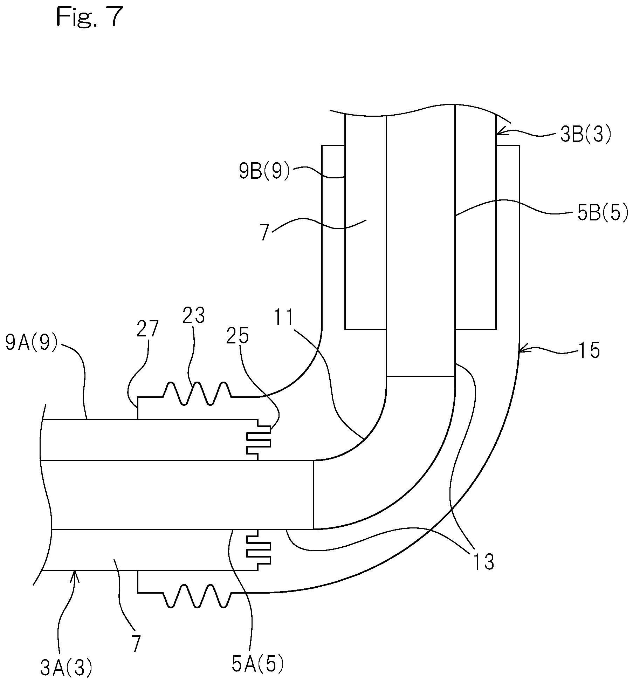

Alternatively or additionally, as illustrated in Fig. 7, in the first straight pipe 3A, the closure portion 25 closing a space between the first outer pipe 9A and the first inner pipe 5A may have a displacement allowance structure having irregularities. Similarly, although not illustrated, in the second straight pipe 3B, the closure portion closing a space between the second outer pipe 9B and the second inner pipe 5B may have a displacement allowance structure. Also by forming the closure portion at the end of the straight pipe with such a structure, stress caused by a bending load can be mitigated, and thermal insulation performance can also be improved due to an increased heat transfer distance.

Next, a method for assembling the piping unit 1 described above will be described.

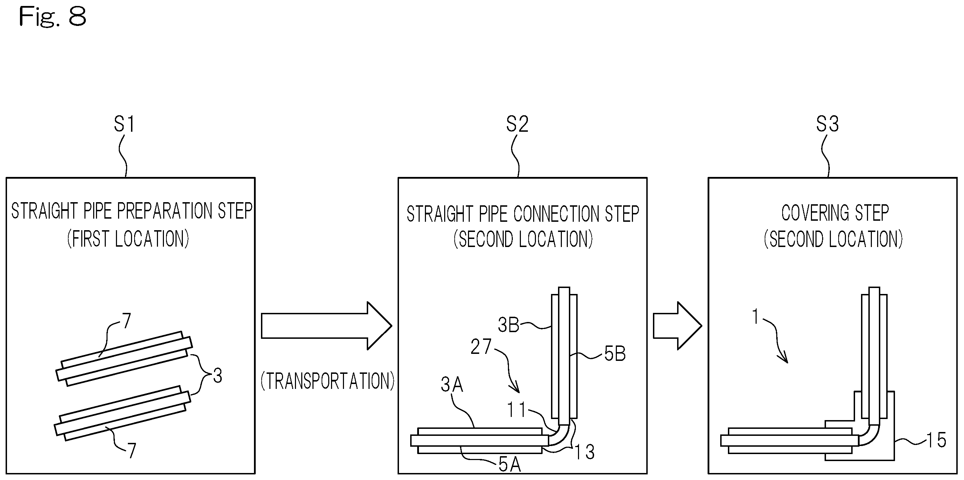

As illustrated in Fig. 8, the method according to the present embodiment includes: a step of preparing a necessary number of (for example, two) straight pipes 3; a step of coupling the first inner pipe 5A of the first straight pipe 3A to one end of the connection bent pipe 11 and connecting the first straight pipe 3A to the second straight pipe 3B via the connection bent pipe 11; and a step of covering, with the cover pipe 15, the connection portion 13 between the first inner pipe 5A and the second inner pipe 5B. In the following description, these steps are sequentially referred to as a "straight pipe preparation step S1", a "straight pipe connection step S2", and a "covering step S3".

In the straight pipe preparation step S1, after the inner pipe 5 and the outer pipe 9 are combined, a space between the inner pipe 5 and the outer pipe 9 is evacuated to fabricate the straight pipe 3. When the inner pipe 5 and the outer pipe 9 are combined, structural components may be used as appropriate, such as a spacer for maintaining spacing between the inner pipe 5 and the outer pipe 9, an expandable and contractible member such as a bellows for absorbing a difference in thermal contraction between the inner pipe 5 and the outer pipe 9, and the like. Evacuation is performed by connecting a vacuum pump to an evacuation port (not illustrated) provided in the outer pipe 9. The vacuum layer 7 is formed by evacuation.

In the straight pipe connection step S2, the first inner pipe 5A of the first straight pipe 3A is coupled to one end of the connection bent pipe 11, and the second inner pipe 5B of the second straight pipe 3B is coupled to the other end of the connection bent pipe 11. Coupling between the connection bent pipe 11 and each straight pipe 3 is performed, for example, by welding. However, coupling between the connection bent pipe 11 and each straight pipe 3 may alternatively be performed by any another method. Note that, in the following description, the first straight pipe 3A, the connection bent pipe 11, and the second straight pipe 3B coupled to each other are collectively referred to as a "pipe core assembly 27".

In the present embodiment, the covering step S3 includes: after the connection step described above, inserting the pipe core assembly 27 through each divided body 21 of the cover pipe 15; and thereafter joining the divided bodies 21 together by welding, thereby covering the connection portion 13 with the cover pipe 15. Thereafter, an internal space of the cover pipe 15 is evacuated. Note that the divided bodies 21 may alternatively be joined together by any method other than welding.

Note that, in a case where the cover pipe 15 is formed not as the divided bodies 21 but as a single pipe body, for example, each straight pipe 3 may be coupled to the connection bent pipe 11 after fixing the connection bent pipe 11 inside the cover pipe 15 in a state where the connection bent pipe 11 is covered with the cover pipe 15. In this case, the straight pipe connection step S2 is performed after the covering step S3. Alternatively, with the inner circumferential dimension of the cover pipe 15 being set to a size that allows the connection portion 13 of the pipe core assembly 27 to be inserted therethrough, the connection portion 13 may be covered with the cover pipe 15 after the pipe core assembly 27 is assembled.

In addition, in the present embodiment, the straight pipe preparation step S1, and the subsequent straight pipe connection step S2 and covering step S3 are performed at different locations. In the present specification, a location where the straight pipe preparation step S1 is performed is referred to as a "first location", and a location where the straight pipe connection step S2 and the covering step S3 are performed is referred to as a "second location". Specifically, the first location is, for example, a factory where pipes are fabricated. The second location is, for example, a facility in which the piping unit 1 is installed. Transportation of each straight pipe 3 from the first location to the second location is performed, for example, by a transportation device such as a truck vehicle.

However, depending on a distance between the first location and the second location, and a weight and number of the straight pipes 3 to be transported, workers may transport them. In addition, it is not essential to perform the straight pipe preparation step S1 and the subsequent straight pipe connection step S2 and covering step S3 at different locations. Furthermore, as described above, the order of performing the straight pipe connection step S2 and the covering step S3 is optional.

A liquefied gas piping unit 1 according to a first aspect of the present disclosure is a piping unit 1 configured to transfer liquefied gas, the piping unit 1 including:
a first straight pipe 3A including a first inner pipe 5A through which the liquefied gas flows, and a first outer pipe 9A covering the first inner pipe 5A with a vacuum layer 7 interposed therebetween, the first straight pipe 3A extending in a straight line;
a second straight pipe 3B including a second inner pipe 5B through which the liquefied gas flows, and a second outer pipe 9B covering the second inner pipe 5B with a vacuum layer 7 interposed therebetween, the second straight pipe 3B extending in a straight line in a direction different from an extension direction of the first straight pipe 3A;
a connection bent pipe 11 connecting the first inner pipe 5A to the second inner pipe 5B; and
a cover pipe 15 covering a connection portion 13 between the first inner pipe 5A and the second inner pipe 5B, the connection portion 13 including at least the connection bent pipe 11.

According to this configuration, since the piping unit 1 is configured using straight pipes having no bent portions as constituent units, each pipe can be fabricated more easily, thereby reducing fabrication costs. In addition, the space required for temporary storage and transportation in a factory and at an installation site during an assembly process of the liquefied gas piping unit 1 can be reduced, resulting in reduced installation costs. Furthermore, the straight pipes are easier to handle, which also leads to improved safety during installation work.

A liquefied gas piping unit 1 according to a second aspect of the present disclosure is the liquefied gas piping unit 1 according to the first aspect, wherein the cover pipe 15 has a shape corresponding to a shape of the connection bent pipe 11. According to this configuration, the installation space of the piping unit 1 can be reduced.

A liquefied gas piping unit 1 according to a third aspect of the present disclosure is the liquefied gas piping unit 1 according to the first or second aspect, wherein the cover pipe 15 includes a plurality of divided bodies 21. According to this configuration, the assembly work of the piping unit 1 at the installation site is facilitated.

A liquefied gas piping unit 1 according to a fourth aspect of the present disclosure is the liquefied gas piping unit 1 according to any one of the first to third aspects, wherein the first straight pipe 3A and the cover pipe 15 have flexibility at a coupling portion between the first straight pipe 3A and the cover pipe 15, and/or the second straight pipe 3B and the cover pipe 15 have flexibility at a coupling portion between the second straight pipe 3B and the cover pipe 15. According to this configuration, it is possible to absorb a bending load that may be generated by thermal contraction of the connection bent pipe 11, thereby mitigating stress applied to the straight pipe 3 and the cover pipe 15.

A method for assembling the liquefied gas piping unit 1 according to a first aspect of the present disclosure is a method for assembling the liquefied gas piping unit 1 according to any one of the first to fourth aspects, the method including:
preparing the first straight pipe 3A by combining the first inner pipe 5A and the first outer pipe 9A and evacuating a space between the inner pipe 5 and the outer pipe 9 to form the vacuum layer 7;
preparing the second straight pipe 3B by combining the second inner pipe 5B and the second outer pipe 9B;
connecting the first straight pipe 3A to the second straight pipe 3B via the connection bent pipe 11 by coupling the first inner pipe 5A of the first straight pipe 3A to one end of the connection bent pipe 11 and coupling the second inner pipe 5B of the second straight pipe 3B to the other end of the connection bent pipe 11; and
covering, with the cover pipe 15, the connection portion 13 between the first inner pipe 5A and the second inner pipe 5B, the connection portion 13 including at least the connection bent pipe 11.

According to this configuration, since the piping unit 1 is assembled using straight pipes having no bent portions as constituent units, each pipe can be fabricated more easily, thereby reducing fabrication costs. In addition, the space required for temporary storage and transportation in a factory and at an installation site during an assembly process of the liquefied gas piping unit 1 can be reduced, resulting in reduced installation costs. Furthermore, the straight pipes are easier to handle, which also leads to improved safety during installation work.

A method for assembling the liquefied gas piping unit 1 according to a second aspect of the present disclosure is the method according to the first aspect for assembling the liquefied gas piping unit 1 according to the third aspect, the method including, after connecting the first straight pipe 3A to the second straight pipe 3B via the connection bent pipe 11, covering the connection portion 13 with the cover pipe 15 by joining the divided bodies 21 together. According to this configuration, the assembly work can be efficiently performed by employing the cover pipe 15 constituted by the divided bodies 21.

A method for assembling the liquefied gas piping unit 1 according to a third aspect of the present disclosure is the method according to the first or second aspect, the method including transporting the first straight pipe 3A and the second straight pipe 3B prepared at a first location to a second location, wherein, at the second location, connecting the first straight pipe 3A to the second straight pipe 3B via the connection bent pipe 11, and covering the connection portion 13 with the cover pipe 15 are performed. According to this configuration, by using straight pipes having no bent portions, the space required for transportation of the pipes can be reduced.

A method for assembling the liquefied gas piping unit 1 according to a fourth aspect of the present disclosure is the method according to the third aspect, wherein the transporting is performed by a transportation device. According to this configuration, by transporting straight pipes having no bent portions, the space required for the transportation device is reduced, and thereby improving transportation efficiency. As a result, the installation costs of the piping unit 1 can be significantly reduced.

While the preferred embodiment of the present disclosure has been described above with reference to the drawings, various additions, modifications, or omissions may be made without departing from the spirit of the present disclosure. Thus, such additions, modifications, or omissions are also included within the scope of the present disclosure.

## Claims

1. A piping unit for liquefied gas, configured to transfer the liquefied gas, the piping unit comprising:
a first straight pipe including a first inner pipe through which the liquefied gas flows, and a first outer pipe covering the first inner pipe with a vacuum layer interposed therebetween, the first straight pipe extending in a straight line;
a second straight pipe including a second inner pipe through which the liquefied gas flows, and a second outer pipe covering the second inner pipe with a vacuum layer interposed therebetween, the second straight pipe extending in a straight line in a direction different from an extension direction of the first straight pipe;
a connection bent pipe connecting the first inner pipe to the second inner pipe; and
a cover pipe covering a connection portion between the first inner pipe and the second inner pipe, the connection portion including at least the connection bent pipe.

2. The piping unit for liquefied gas as claimed in claim 1, wherein
the cover pipe has a shape corresponding to a shape of the connection bent pipe.

3. The piping unit for liquefied gas as claimed in claim 1, wherein
the cover pipe includes a plurality of divided bodies.

4. The piping unit for liquefied gas as claimed in claim 1, wherein
the first straight pipe and the cover pipe have flexibility at a coupling portion between the first straight pipe and the cover pipe, and/or
the second straight pipe and the cover pipe have flexibility at a coupling portion between the second straight pipe and the cover pipe.

5. A method for assembling the piping unit for liquefied gas as claimed in claim 1, the method comprising:
preparing the first straight pipe by combining the first inner pipe and the first outer pipe and evacuating a space between the first inner pipe and the first outer pipe to form the vacuum layer;
preparing the second straight pipe by combining the second inner pipe and the second outer pipe and evacuating a space between the second inner pipe and the second outer pipe to form the vacuum layer;
connecting the first straight pipe to the second straight pipe via the connection bent pipe by coupling the first inner pipe of the first straight pipe to one end of the connection bent pipe and coupling the second inner pipe of the second straight pipe to the other end of the connection bent pipe; and
covering, with the cover pipe, the connection portion between the first inner pipe and the second inner pipe, the connection portion including at least the connection bent pipe.

6. The method as claimed in claim 5 for assembling the piping unit for liquefied gas as claimed in claim 3, the method comprising
after connecting the first straight pipe to the second straight pipe via the connection bent pipe, covering the connection portion with the cover pipe by joining the divided bodies together.

7. The method as claimed in claim 5, comprising
transporting the first straight pipe and the second straight pipe prepared at a first location to a second location, wherein
at the second location, connecting the first straight pipe to the second straight pipe via the connection bent pipe, and covering the connection portion with the cover pipe are performed.

8. The method as claimed in claim 7, wherein
the transporting is performed by a transportation device.
